# EUROPEAN PATENT APPLICATION

(11) **EP 2 189 890 A2**
(43) Date of publication of application: **26.05.2010**
(21) Application number: 09172757.8
(22) Date of filing: 12.10.2009
(51) Int. Cl.: G06F 3/048, G06F 3/01

(54) **Method for operating user interface based on motion sensor and a mobile terminal having the user interface**

(30) Priority: 14.11.2008 KR 20080113141
(71) Applicant: Samsung Electronics Co., Ltd., Suwon-si, Gyeonggi-do (KR)
(72) Inventor: Shin, Seung Woo, Gyeonggi-do (KR); Oh, Jung Yeob, Gyeonggi-do (KR); Lee, Myeong Lo, Gyeonggi-do (KR); Kim, Jin Yong, Gyeonggi-do (KR); Kim, Kyung Hwa, Gyeonggi-do (KR)
(74) Representative: Boakes, Jason Carrington

(57) **Abstract**

The present invention relates to a method of operating a user interface (UI) based on a motion sensor and a mobile terminal using the same. The method of operating a UI of a mobile terminal including a touch sensor and a motion sensor includes identifying an input of a mode conversion key, activating the motion sensor, and converting a UI mode to a motion mode. The mobile terminal having a touch sensor and motion sensor may include a display unit and a controller. The display unit may display an application execution screen. The controller may activate the motion sensor if mode conversion is requested in an activated state of the touch sensor, and may activate the touch sensor if mode conversion is requested in an activated state of the motion sensor.

## Description

### BACKGROUND OF THE INVENTION

### FIELD OF THE INVENTION

Exemplary embodiments of the present invention relate to a method for operating a user interface (UI) and a mobile terminal having the UI. Exemplary embodiments of the present invention also relate to a method for operating a UI based on a motion sensor and a mobile terminal having the UI.

### DESCRIPTION OF THE BACKGROUND

A mobile terminal may provide various data transmission services such as voice communication services, and may be used as a multimedia communication-type device. UI technology used for controlling a mobile terminal is continuously advancing and being developed.

Although a UI in a mobile terminal may include a touch sensor and a motion sensor, technologies for operating a UI if only a motion-based UI is used and/or when a touch-based UI is not available (e.g., a touch screen is disabled by a user or the user wears gloves) have not yet been developed. Accordingly, there is a need for a method of operating a UI in which only a motion UI may be used. Furthermore, there exists a need for a method of operating a UI in which transition to a UI mode may be performed easily. A user may experience greater convenience if a motion UI that can be easily used and adapted is provided.

### SUMMARY OF THE INVENTION

Exemplary embodiments of the present invention provide a method for operating a UI and a mobile terminal having the UI in which only a motion UI may be used when a motion UI alone may be adequate or when a touch UI is not available.

Exemplary embodiments of the present invention further provide a method for operating a UI and a mobile terminal using the method in which a UI mode of the mobile terminal is changed.

Additional features of the invention will be set forth in the description which follows, and in part will be apparent from the description, or may be learned by practice of the invention.

Exemplary embodiments of the present invention disclose a method for operating a user interface (UI) of a mobile terminal having a touch sensor and a motion sensor. The method includes receiving a mode conversion input, activating the motion sensor, and converting a UI mode to a motion mode.

Exemplary embodiments of the present invention also disclose a method for operating a user interface (UI) of a mobile terminal having a touch sensor and a motion sensor. The method includes identifying, if the motion sensor is activated, a pop-up event, activating the touch sensor, and converting a UI mode from a motion mode to a touch mode.

Exemplary embodiments of the present invention also disclose a mobile terminal including a touch sensor, a motion sensor, a display unit and a controller. The display unit displays an application execution screen. The controller activates the motion sensor in response to a mode conversion request received in an activated state of the touch sensor. The controller activates the touch sensor in response to the received mode conversion request.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 shows a configuration of a mobile terminal having a UI according to exemplary embodiments of the present invention.

FIG. 2 is a flow chart showing a method for operating a UI according to exemplary embodiments of the present invention.

FIG. 3 shows display screen states after entering and exiting a motion mode in the method of FIG. 2 according to exemplary embodiments of the present invention.

FIG. 4 shows display screens for execution of an application in a motion gate display state in the method of FIG. 2 according to exemplary embodiments of the present invention.

FIG. 5 is a flow chart showing a process of setting an application icon in the motion gate in the method of FIG. 2 according to exemplary embodiments of the present invention.

FIG. 6 shows a motion gate set-up menu in the method of FIG. 2 according to exemplary embodiments of the present invention.

FIG. 7 shows display screens for setting an application icon of the motion gate in the method of FIG. 2 according to exemplary embodiments of the present invention.

FIG. 8 is a flow chart showing a method for operating a UI according to exemplary embodiments of the present invention.

FIG. 9 is a flow chart showing a method for operating a UI according to exemplary embodiments of the present invention.

FIG. 10 shows display screen states when converting a UI mode according to the methods of FIG. 8 and FIG. 9, according to exemplary embodiments of the present invention.

FIG. 11 shows display screens in which a UI mode is converted according to the methods of FIG. 8 and FIG. 9, according to exemplary embodiments of the present invention.

FIG. 12 is a flow chart showing a method for operating a UI according to exemplary embodiments of the present invention.

FIG. 13 shows display screens in which a UI mode is converted according to the method of FIG. 12, according to exemplary embodiments of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements. Detailed descriptions of well-known functions and structures incorporated herein may be omitted to avoid obscuring the subject matter of the present invention.

Prior to explaining exemplary embodiments of the present invention, relevant terminology will be defined for the description below.

A 'motion mode' may refer to a mode in which a motion sensor identifies a motion applied by a user to a mobile terminal and generates a corresponding signal. The generated signal may be used as an input signal for executing a function execution command of the mobile terminal.

A 'touch mode' may refer to a mode in which a touch sensor identifies the user's touching motion applied to the mobile terminal and generates a corresponding signal. The generated signal may be used as an input signal for executing a function execution command of the mobile terminal.

A 'motion gate' may refer to a menu screen displayed after the mobile terminal enters the motion mode and guides execution of a motion mode application. The motion gate may include an application icon corresponding to an application used in the motion sensor. The user may execute a desired application by applying a motion to the mobile terminal when the motion gate is displayed.

A 'motion mode key' may refer to a key for entering the motion mode. The 'motion mode key' may be a key provided on a key pad and may be a numeral key, direction key, function key, or a hot key set by a user.

A 'motion conversion key' may refer to a key for changing a UI mode. The UI mode may be changed from the motion mode to the touch mode or from the touch mode to the motion mode. The 'motion conversion key' may be provided on the key pad and may be a numeral key, direction key, function key, or a hot key set by the user.

Hereinafter, exemplary embodiments of the present invention are described in detail with reference to the accompanying drawings.

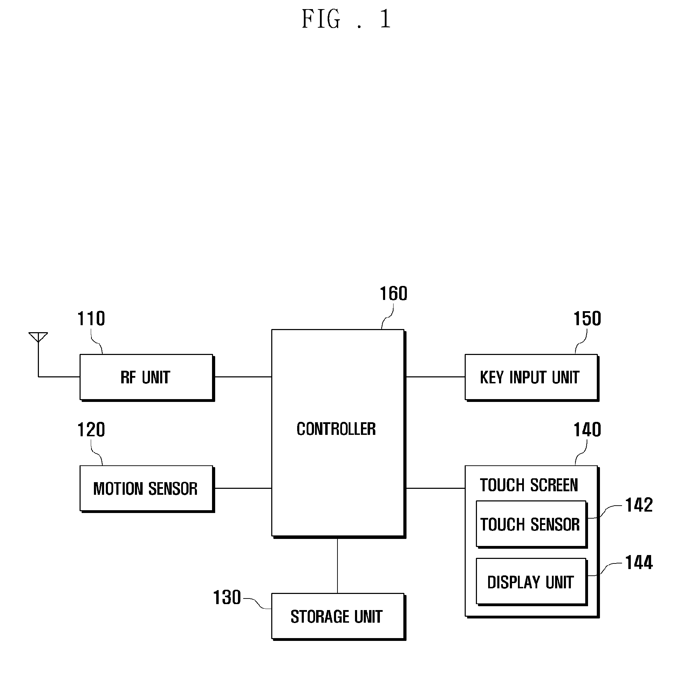

FIG. 1 shows a configuration of a mobile terminal having a UI according to exemplary embodiments of the present invention.

The mobile terminal may include a RF (radio frequency) unit 110, a motion sensor 120, a storage unit 130, a touch screen 140, a key input 150, and a controller 160. The RF unit 110 may transmit and receive data signals for wireless communications associated with the mobile terminal. The RF unit 110 may include an RF transmitter for up-converting and amplifying signals to be transmitted, and an RF receiver for low-noise amplifying and down-converting received signals. The RF unit 110 may receive data signals through wireless channels, may output the data signals to a controller 160, and may transmit data signals output from the controller 160 through wireless channels.

The motion sensor 120 may detect a motion applied to the mobile terminal by the user. The motion sensor 120 may be an acceleration sensor, gyro sensor, terrestrial magnetic sensor, or, in general, any suitable sensor that may identify a user's motion applied to the mobile terminal and/or a motion of the mobile terminal.

The storage unit 130 may store programs and data necessary for operating the mobile terminal. The storage unit 130 may store an application set on a motion gate and an application icon corresponding to the application.

The touch screen 140 may include a touch sensor 142 and a display unit 144. The touch sensor 142 may detect whether a touch apparatus contacts the touch screen 140. The touch sensor 142 may include a capacitive touch sensor and a pressure sensor, but is not limited thereto. The touch sensor 142 may, in general, be any sensor that can detect an approach/touch of an object. The touch sensor 142 may transmit a touch detection signal to the controller 160 when the touch sensor 142 detects a touch on the touch screen 140. The touch detection signal may include information about the contact and touch position of the touch of a touch apparatus on the touch screen 140. A touch apparatus may include a user's finger, a pen, a stylus, or in general, any suitable touch device that can be detected by the touch sensor 142.

The display unit 144 may preferably be formed with a liquid crystal display (LCD) device, and may visually provide the user with a menu of the mobile terminal, input data, function set-up information, and various other information. The display unit 144 may include the LCD device, a controller for controlling the LCD device, and a video memory for storing visual data. The display unit 144 may serve as an application execution screen and may display a motion gate.

The key input unit 150 may generate a key operation signal in response to an input by the user. The key input unit 150 may output the key operation signal to the controller 160. The key input unit 150 may be a key pad including numeral keys and direction keys, and, in some cases, may include only predetermined function keys. The key input unit 150 may include a motion mode key or a mode conversion key. The motion mode key and mode conversion key may be a numeral key, direction key, or function key provided on the key pad, and may be a hot key set by the user.

The controller 160 may control overall operations of the mobile terminal and signal flows between internal units thereof. The controller 160 may activate the motion sensor 120 if a motion mode key is input in a deactivated state of the motion sensor 120; may receive a motion signal input from the motion sensor 120 when the display unit 144 displays a motion gate; and may execute an application. When activating the motion sensor 120, the controller 160 may deactivate the touch sensor 142. Furthermore, the controller 160 may change a UI mode when a mode conversion key is input. A UI mode may be changed from a touch mode to a motion mode or from a motion mode to a touch mode. The controller 160 may change a UI mode when a pop-up event occurs. The controller 160 may suspend an application that is being executed when a pop-up event occurs, and may resume the suspended application when the pop-up event ends. The controller 160 may include a motion detector acting as an interface between the controller 160 and motion sensor 120.

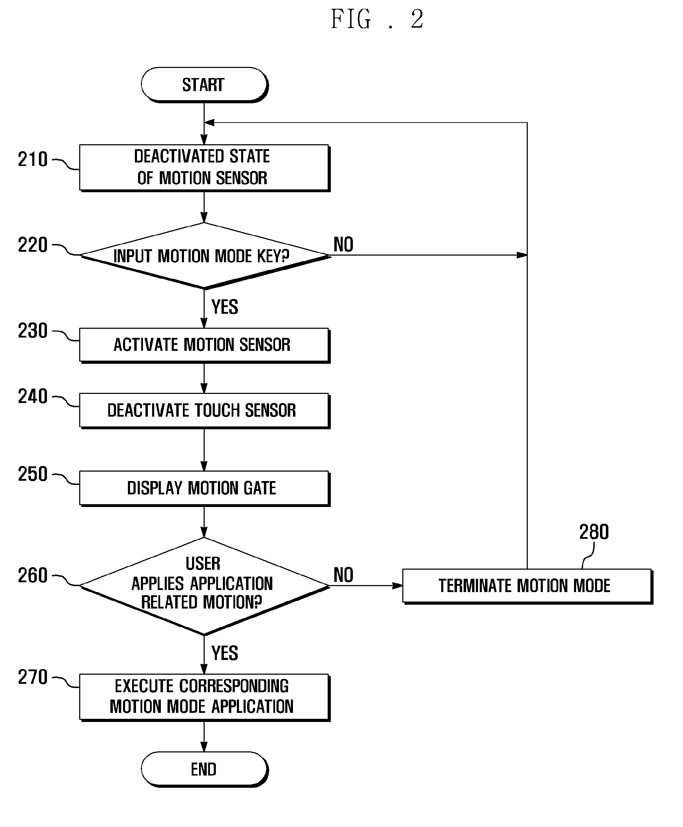

FIG. 2 is a flow chart showing a method for operating a UI according to exemplary embodiments of the present invention.

The controller 160 may maintain the motion sensor 120 in a deactivated state (210). The deactivated state of the motion sensor 120 may be a state in which the motion sensor 120 is inoperable, or a state in which the motion sensor 120 cannot identify a user's motion even though the motion sensor 120 is operable (e.g., motion lock state). In general, the deactivated state of the motion sensor 120 may correspond to states in which the motion sensor 120 cannot identify the user's motion. In the deactivated state of the motion sensor 120, a standby screen may be displayed or a screen of the display unit 144 may be turned off. The deactivated state may be a state in which an application that excludes the motion mode (e.g., a touching application) is executed.

Next, the controller 160 may identify whether a motion mode key is input through the key input unit 150 (220). The motion mode key may be a key provided on the key input unit 150, and may be used to enter or start the motion mode. The motion mode key may be a numeral key, direction key, function key, or hot key set by the user. For example, if the motion mode key is a function key separately provided on the mobile terminal, the user may enter the motion mode by inputting the function key. In some cases, the user may enter the motion mode by pressing a motion mode key (e.g., 'OK' key) for a time duration equal to or greater than a preset time duration. If no motion mode key is input, the motion sensor 120 may return to the deactivated state (210).

If the controller 160 identifies an input of the motion mode key, the controller 160 may enter the motion mode, and may activate the motion sensor 120 (230). The controller 160 may control the motion sensor 120 when the motion sensor 120 is in an inoperable state. In some cases, the controller 160 may release a lock function and wait for the user's input when the motion sensor 120 does not identify the user's motion even though the motion sensor 120 is operable. After activating the motion sensor, the controller 160 may deactivate the touch sensor 142 (240). In some cases, the controller 160 may activate the motion sensor 120 and simultaneously deactivate the touch sensor 142. The touch sensor 142 may be activated or deactivated in the motion mode.

The controller 160 may instruct the display unit 144 to display a motion gate (250). The motion gate may serve as a guide to executing a motion mode application. The user may execute a desired application by applying a motion to the mobile terminal when the motion gate is displayed.

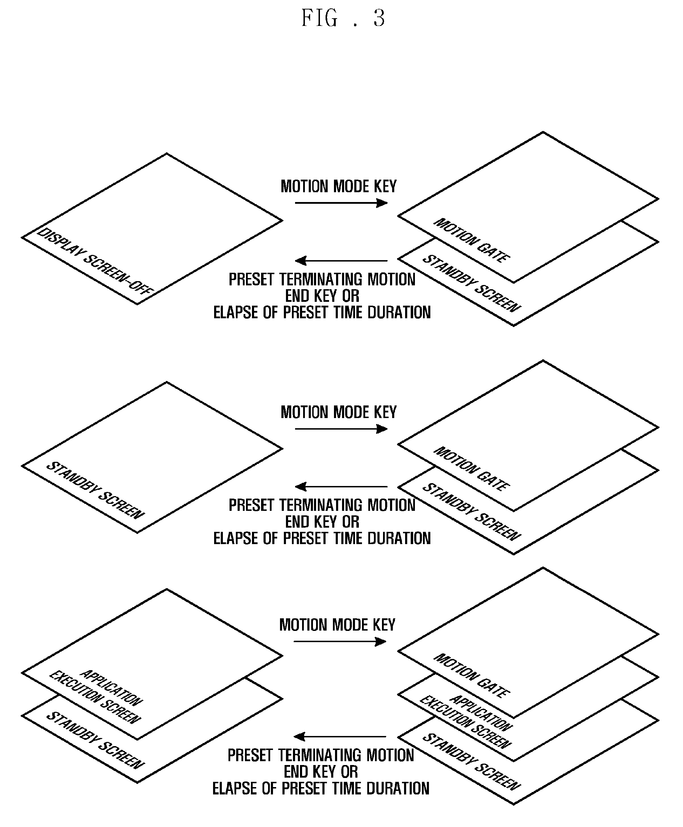

FIG. 3 shows display screen states after entering and exiting a motion mode. Examples of deactivated states of the motion sensor 120 include a display screen-off state, standby screen display state, and application execution state excluding the motion mode as shown in FIG. 3. If the user inputs the motion mode key in the deactivated state of the motion sensor 120, the controller 160 may instruct the display unit 144 to display a motion gate. If the user inputs the motion mode key in the display screen-off state, a standby screen may be located in the background and the motion gate may be displayed in the foreground. If the user inputs the motion mode key in the standby screen display state, the standby screen may be located in the background and the motion gate may be displayed in the foreground. If the user inputs the motion mode key in the application execution state excluding the motion mode, the standby screen and an application execution screen may be located in the background, and the motion gate may be displayed in the foreground.

After displaying the motion gate, the controller 160 may determine whether the user applies an application-related motion to execute a motion mode application through the motion sensor 120 (260). If the user inputs a preset key (e.g., an end key) provided on the key input unit 150, or if the user applies a motion having a preset end function or return function in the motion gate display state, the controller 160 may terminate the motion mode (280) and return the motion sensor 120 to the deactivated state (210). Further, if a user's motion is not applied or a key is not input in the motion gate display state within a preset time duration, the controller 160 may terminate the motion mode (280) and return the motion sensor 120 to the deactivated state (210) after the preset time duration has elapsed. Although a preset terminating motion application, preset key input, and elapse of the preset time duration may be exemplified as inputs to return the motion sensor 120 to the deactivated state in step 210, various suitable methods and inputs may be used to return the motion sensor 120 to the deactivated state.

If the user applies an application-related motion to execute a motion mode application at step 260, the motion sensor 120 may identify the user's motion as an input signal and may output the signal to the controller 160. An application-related motion to execute an application may include, but is not limited to, tapping (in which the motion of the tapped mobile terminal is detected by the motion sensor 120), sudden movement in a specific direction, or shaking of the mobile terminal. The controller 160 may receive the input signal from the motion sensor 120 and may identify the user's motion applied to the mobile terminal as corresponding to an application execution command. The controller 160 may then execute an application corresponding to the user's motion (270).

The motion gate screen may display at least one application icon. When a plurality of application icons are displayed, the controller 160 may instruct the display unit 144 to display the application icons in distinguishable directions with reference to the center of the display unit 144. For example, if four application icons are displayed, the controller 160 may instruct the display unit 144 to display one of the application icons in each of the right, left, upward and downward directions with reference to the center of the display unit 144.

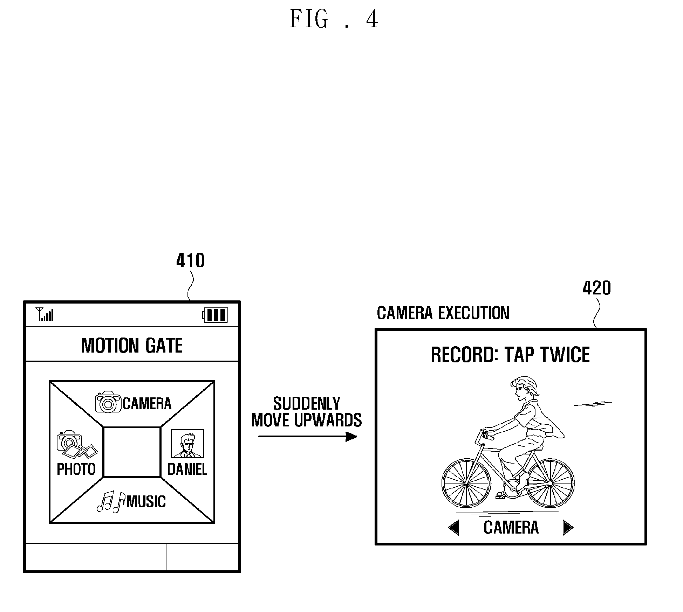

FIG. 4 shows display screens for execution of an application when the motion gate is displayed. An example of the motion gate screen is shown as a display screen 410 in FIG. 4. The motion gate may include application icons, such as, for example, a camera icon, photo icon, music icon, and/or motion dial icon (e.g., Daniel). Each application icon displayed on the motion gate may correspond to a motion mode application that can be controlled by applying a preset motion. The user may apply an application-related motion in a motion gate display state of the display screen 410. An application may be executed by, for example, a motion (e.g., sudden movement) of the user. In some cases, an application may be executed according to a direction of the motion applied by the user. Four application icons may be located on the right, left, top, and bottom relative to the center of the display unit 144 in FIG. 4. For example, as shown in display screen 420, if the user suddenly moves the mobile terminal in an upward direction, the controller 160 may execute a photographing function corresponding to the camera application icon located in the top portion of the display screen 410. If the sudden movement is performed in the left direction by the user, the controller 160 may execute an image display function. If the sudden movement is performed in the downward direction, the controller 160 may execute a music function. If the sudden movement is performed in the right direction, the controller 160 may execute a call connection function to 'Daniel'.

An application executed in the motion gate may correspond to a motion mode application that executes a function by receiving input from the motion sensor. Referring to the display screen 420 of FIG. 4, the executed photographing function may require further input of the user's motion. In the display screen 420, RECORD: TAP TWICE' may be displayed, and a recording function may be executed if the user taps the mobile terminal twice. If a music function is being executed, for example, playing music may be set to detecting sudden movement twice, and stopping may be set to detecting a tapping once.

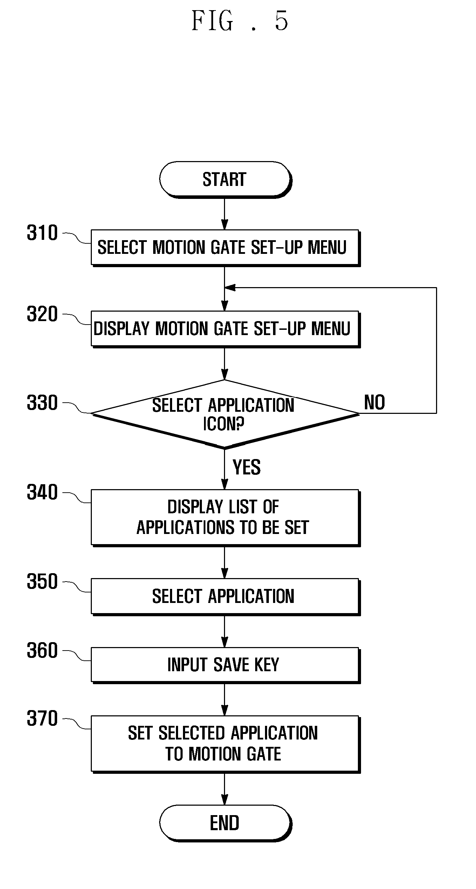

FIG. 5 is a flow chart showing a process of setting an application icon in the motion gate in the method of FIG. 2.

Setting of an application icon of the motion gate may be performed using a motion gate set-up menu before entering the motion mode. The motion gate set-up menu may be a menu provided in the mobile terminal for setting application icons included in the motion gate. The motion gate set-up menu may be selected through the key input unit 150 or touch sensor 142 (310). The controller 160 may determine if the motion gate set-up menu is selected through the key input unit 150 or touch sensor 142. When the motion gate set-up menu is selected, the controller 160 may instruct the display unit 144 to display the motion gate set-up menu (320). In the motion gate set-up menu, application icons included in the motion gate may be displayed when the motion mode is entered. An ON/OFF selection option for setting the application icon may also be displayed. The user may set application icons by selecting ON in the ON/OFF selection option.

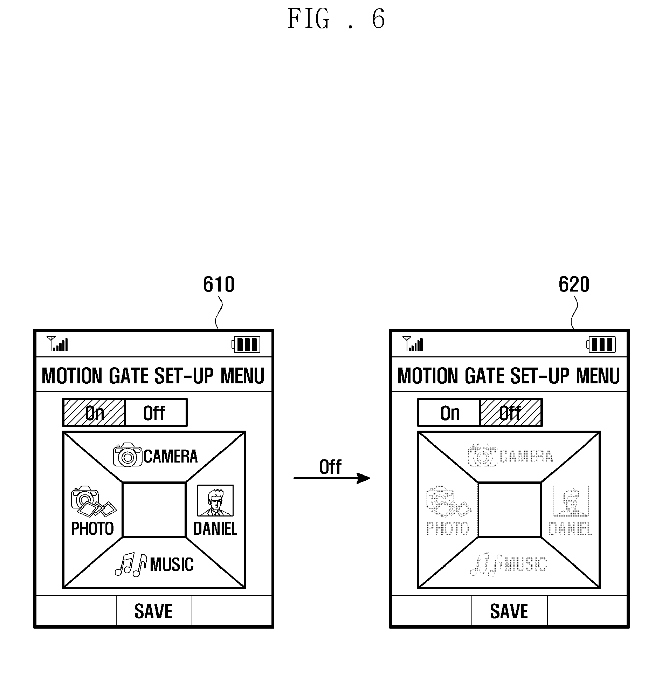

For example, FIG. 6 shows the ON/OFF selection option displayed in the motion gate set-up menu. When the user selects ON in the ON/OFF selection option, one or more application icons may be displayed on a display screen 610 in a state of availability for selection. The icons may be displayed in a distinctive manner, and the user may select an icon by touching the icon. When the user selects OFF in the ON/OFF selection option, the application icons may be displayed on a display screen 620 in a state of non-availability for selection. The icons may be displayed in an indistinctive manner, and, even if the icon is touched, the touch sensor 142 may not detect the user's touch. Accordingly, the user may select setting of a mode application icon through the ON/OFF selection option.

Referring back to FIG. 5, the controller 160 may determine whether an application icon is selected in the motion gate set-up menu (330). If no application icon is selected, the display unit 144 may continue displaying the motion gate set-up menu until an application icon is selected. The application icon may be selected by the user through the touch sensor 142 or key input unit 150.

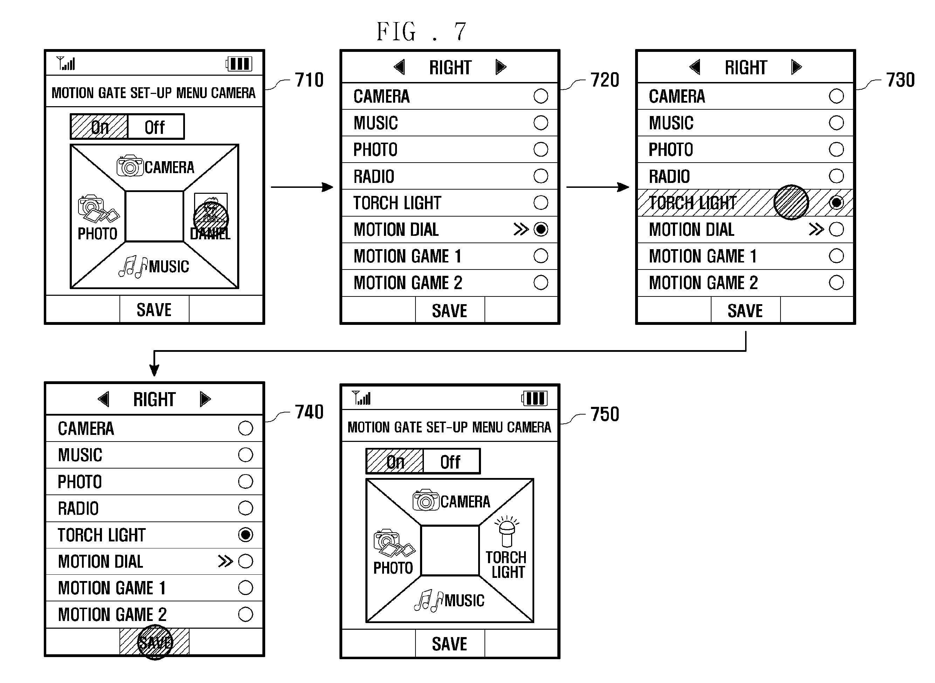

For example, FIG. 7 shows a sequence of display screens illustrating a process of setting an application icon in the motion gate in the method of FIG. 2. In a display screen 710, the selection option ON may be selected in the motion gate set-up menu, and the application icon 'Daniel' may then be selected. The 'Daniel' icon may be an application icon corresponding to the motion dial function.

If the user selects an application icon in the motion gate set-up menu, the controller 160 may instruct the display unit 144 to display a list of motion mode applications that may be set on the motion gate (340), as shown in the display screen 720 of FIG. 7. Applications of the motion mode may be displayed in the list of motion mode applications. Each application included in the list of motion mode applications may correspond to a motion mode application that may execute a function by input of a user's motion. The list of motion mode applications shown in a display screen 720 includes 'CAMERA,' 'MUSIC,' 'PHOTO,' 'RADIO,' 'TORCH LIGHT,' 'MOTION DIAL,' 'MOTION GAME 1,' and 'MOTION GAME 2' applications. The display unit 144 may display an application (e.g., 'MOTION DIAL') that may be currently selected.

The controller 160 may identify a user's selection of an application from the list of displayed applications that may be set (350). The application may be selected through the touch sensor 142 or the key input unit 150. In display screen 730, the user, for example, selects 'torch light' as an application to be included in the motion gate. When the 'torch light' application is selected, a symbol, for example, ⊙, indicating selection of an application may move adjacent to the 'torch light'. Another symbol, for example, >> may indicate an application that is currently set.

The user may input a save key to set the selected application in the motion gate (360), as shown in display screen 740. The save key may complete set-up of the motion gate. If the save key is not input, the set-up process may not be terminated.

After the save key is input by the user, the controller 160 may set the application selected in step 350 to be included in the motion gate (370). The application icon included in the motion gate may thereby be converted to the application icon corresponding to the application selected in step 350. For example, display screen 750 shows a motion gate set-up menu after setting an application icon. Comparing the display screen 750 (after the setting) with the display screen 710 (prior to the setting), it can be seen that the application icon 'Daniel' located on the right side of the display screen 710 is replaced with the application icon 'torch light' on the display screen 750.

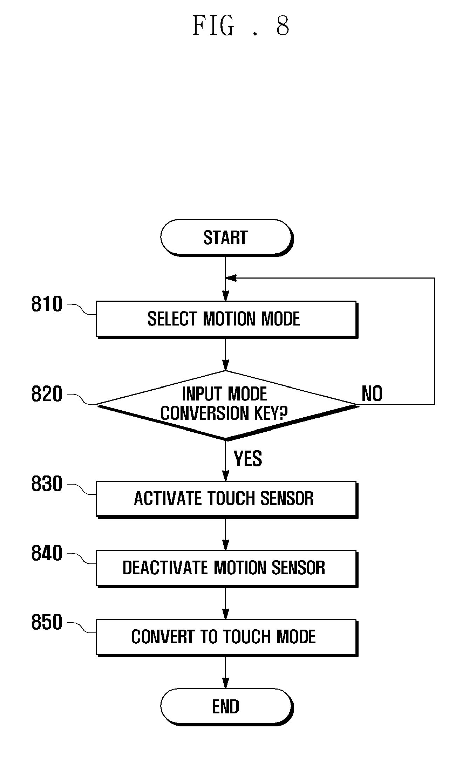

FIG. 8 is a flow chart showing a method for operating a UI according to exemplary embodiments of the present invention.

The controller 160 may identify selection of a motion mode by a user (810). The motion mode may be a mode in which the motion sensor 120 is activated, thereby enabling the user to apply a motion to execute a function of the mobile terminal. In the motion mode, a motion mode application may be executed and the touch sensor 142 may be in a deactivated state.

The controller 160 may determine whether a mode conversion key is input (820). The motion conversion key may be a key for inputting a conversion command of a UI mode, for example, to change the UI mode from the motion mode to the touch mode. The motion conversion key may be a key provided on the key input unit 150 and may be a numeral key, direction key, function key, or any hot key set by the user.

If a mode conversion key is not input, the controller 160 may return to step 810. If a mode conversion key is input, the controller 160 may activate the touch sensor 142 (830). The activation of the touch sensor 142 may cause the touch sensor 142 to be operational, or to suspend a lock function that prevents identification of the user's touch if the touch sensor 142 is operable but not able to identify the user's touch (e.g., lock state). Next, the controller 160 may deactivate the motion sensor 120 (840). In some cases, the controller 160 may activate the touch sensor 142 and simultaneously deactivate the motion sensor 120. In some cases, the controller 160 may activate the touch sensor 142 and may maintain the motion sensor 120 in the activated state.

The controller 160 may convert the UI mode from the motion mode to the touch mode (850). Thereafter, the controller 160 may identify the user's input through the touch sensor 142 and key input unit 150 in the touch mode, and may not control a function of the mobile terminal by the user applying a motion.

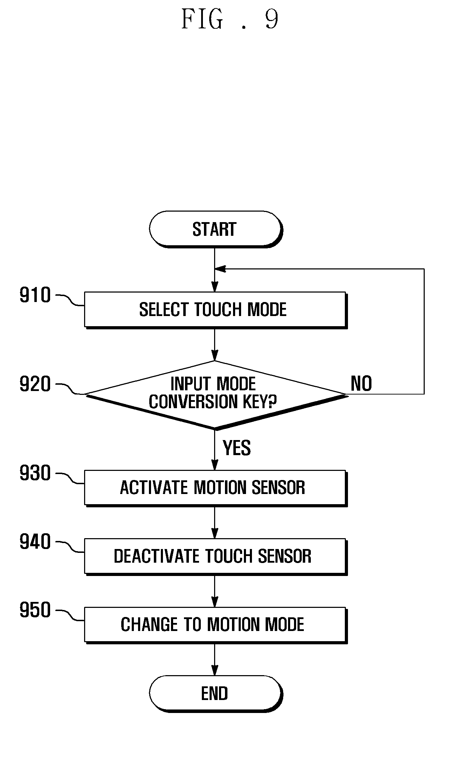

FIG. 9 is a flow chart showing a method for operating a UI according to exemplary embodiments of the present invention.

The controller 160 may identify selection of a touch mode by a user (910). The touch mode may be a mode in which the touch sensor 142 is activated, thereby enabling the user to input a touch to execute a function of the mobile terminal. In the touch mode, a touch mode application may be executed, and the motion sensor 150 may be deactivated.

The controller 160 may determine whether a mode conversion key is input (920). If a mode conversion key is not input, the controller 160 may return to step 910. If a mode conversion key is input, the controller 160 may activate the motion sensor 120 (930). The activation of the motion sensor 120 may cause the motion sensor 120 to be operational, or to suspend a lock function that prevents identification of the user's motion if the motion sensor 120 is operable but not able to identify the user's motion (e.g., lock state). The controller 160 may deactivate the touch sensor 142 (940). In some cases, the controller 160 may activate the motion sensor 120 and simultaneously deactivate the touch sensor 142.

The controller 160 may change the UI mode from the touch mode to the motion mode (950). Thereafter, the controller 160 may identify the user's input through the motion sensor 120 and key input unit 150 in the motion mode, and may not control a function of the mobile terminal by the user's touch input through the touch screen 140.

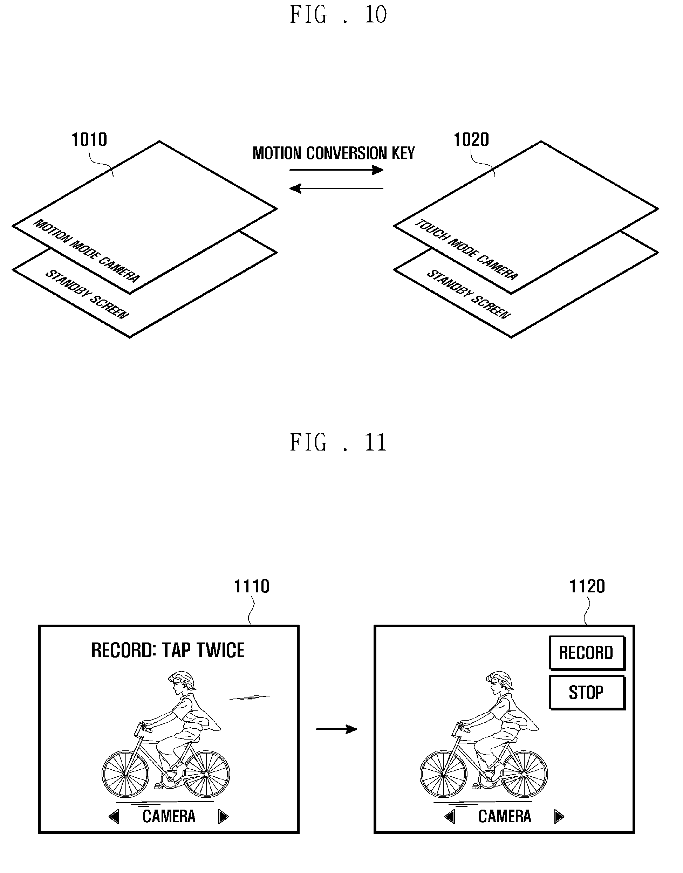

FIG. 10 shows display screen states when changing a UI mode according to the methods of FIG. 8 and FIG. 9. FIG. 11 shows display screens in which a UI mode is changed according to the methods of FIG. 8 and FIG. 9.

A state 1010 in which a motion mode camera function is executed is shown in FIG. 10. A standby screen may be located in the background, and a motion mode camera execution screen 1110 (shown in FIG. 11) may be located in the foreground. The controller 160 may control, for example, a camera function by input of the user's motion in a motion mode. The user may tap twice and execute a 'record' function of the camera function.

When the user inputs a motion conversion key, the controller 160 may change the UI mode from a motion mode to a touch mode. FIG. 10 illustrates a state 1020 in which the camera function of the touch mode is executed. The standby screen may be located in the background, and a touch mode camera execution screen 1120 (shown in FIG. 11) may be located in the foreground. The controller 160 may control a camera function by input of the user's touch in a touch mode, and the user may execute, for example, the camera function by touching an icon, such as 'record' and/or 'stop,' displayed on the touch screen 140. When the user inputs the mode conversion key in the touch mode, the controller 160 may change the UI mode from the touch mode to the motion mode.

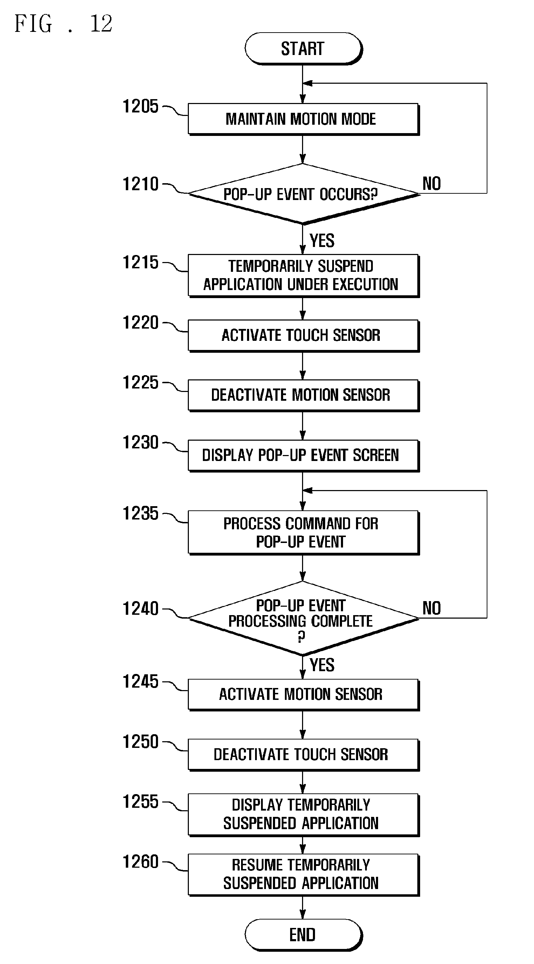

FIG. 12 is a flow chart showing a method for operating a UI according to exemplary embodiments of the present invention.

The controller 160 may maintain a motion mode (1205). The motion mode may be a mode in which the motion sensor 120 is activated and a function of the mobile terminal is executed by input of the user's motion. In the motion mode, a motion mode application may be executed, and the touch sensor 142 may be deactivated.

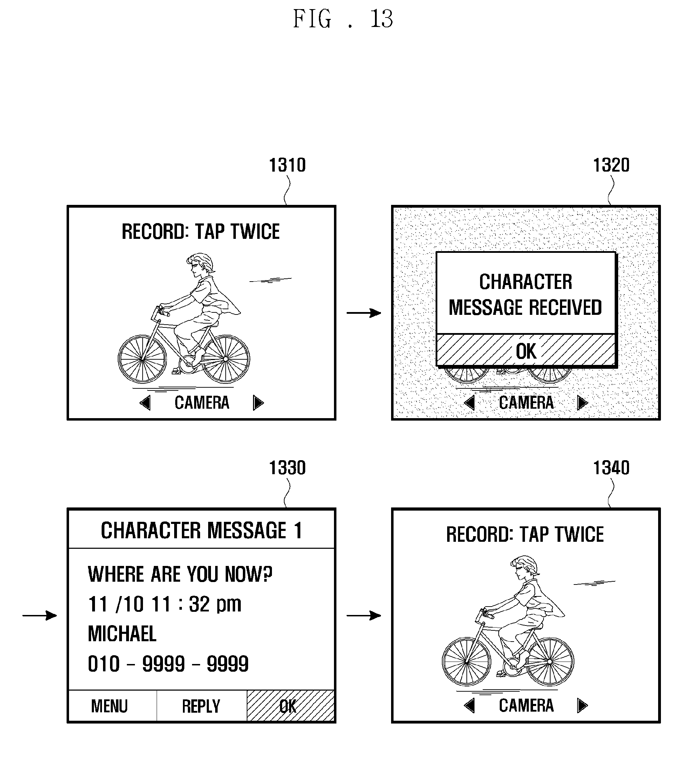

FIG. 13 shows display screens in which a UI mode is converted according to the method of FIG. 12. FIG. 13 illustrates a display screen 1310 in which a motion mode application is executed. The controller 160 may execute an application function by input of the user's motion in the motion mode. The display screen 1310 may be displayed to execute a camera function in the motion mode. The user may execute a 'record' function by tapping twice on the mobile terminal.

The controller 160 may determine whether a pop-up event has occurred (1210). A pop-up event may be an event that may be generated without a user's input. The pop-up event may include a voice call reception, message reception, alarm function, Bluetooth connection request, or an IM (instant messenger) message reception.

If no pop-up event has occurred, the controller may maintain the motion mode. If a pop-up event is generated, the controller 160 may temporarily suspend the application that is presently being executed (1215). If the executed motion mode application corresponds to a standby screen display or display screen off, the application may continue to be executed. If the executed application is an active application, such as, for example, music play and moving image play, the application being executed may temporarily be suspended.

Next, the controller 160 may activate the touch sensor 142 (1220). The activation of the touch sensor 142 may cause the touch sensor 142 to be operational, or to suspend a lock function that prevents identification of the user's touch if the touch sensor 142 is operable but not able to identify the user's touch (e.g., lock state). The controller 160 may deactivate the motion sensor 120 (1225). In some cases, the controller 160 may activate the touch sensor 142 and simultaneously deactivate the motion sensor 120.

The controller 160 may instruct the display unit 144 to display a pop-up event screen (1230). If, for example, a voice call is received, the controller 160 may display a corresponding message informing the user that the voice call is received. If, for example, a character message is received, the controller 160 may display a corresponding message informing the user that the character message is received. FIG. 13 shows a screen 1320 in which a pop-up event is generated informing the user that a character message is received.

The user may then input a processing command for a pop-up event using the touch sensor 142 in response to the display of the pop-up event screen. The controller 160 may process the command for the pop-up event (1235). In some cases, the user may confirm that the message is received by touching 'OK' on the screen 1320. In some cases, the controller 160 may display a screen 1330 in which the user may check the content of the received character message. If a voice call is received, the user may perform a call communication by inputting a call connection key. The controller 160 may control the RF unit 110 to perform a call communication.

The controller 160 may determine whether the pop-up event processing is complete (1240). If the pop-up event processing is not complete, the controller 160 may wait till the command for the pop-up event is completely processed. When the pop-up event processing is complete, the motion sensor 120 may be activated (1245). The pop-up event processing may be completed when, for example, a message reception/transmission function is terminated by inputting a message confirmation key, a voice communication function is terminated by inputting a call end key, or an alarm function is terminated by inputting an alarm confirmation key. The above-mentioned keys may be provided on the touch screen 140 or the key input unit 150. The controller 160 may then deactivate the touch sensor 142 (1250). In some cases, the controller 160 may activate the motion sensor and simultaneously deactivate the touch sensor 142. After returning to the motion mode at step 1250, the state of the mobile terminal may correspond to that of the mobile terminal in step 1205 (e.g., maintaining the motion mode).

The controller 160 may instruct the display unit 144 to display an application execution screen 1340 of the application temporarily suspended in step 1215 (1255), and may then resume execution of the temporarily suspended application in the motion mode (1260).

According to exemplary embodiments of the present invention, the user may use a motion UI when a motion UI may be adequate and a touch UI is not available. The user may convert a UI mode from a motion UI to a touch UI, or from a touch UI to a motion UI. Furthermore, the user may use a UI suitable for an event when the event is generated during usage of the mobile terminal.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method for operating a user interface (UI) of a mobile terminal having a touch sensor and a motion sensor, the method comprising:
receiving a mode conversion input;
activating the motion sensor; and
converting a UI mode to a motion mode.

2. The method of claim 1, further comprising:
displaying a motion menu comprising at least one application icon corresponding to an application executable through the motion sensor.

3. The method of claim 2, further comprising:
executing an application corresponding to a motion of the mobile terminal.

4. The method of claim 2, wherein displaying a motion menu comprises displaying, on a display screen of the mobile terminal, the at least one application icon in a distinguishable location relative to a center point of the display screen.

5. The method of claim 3, wherein executing an application comprises executing an application corresponding to a displayed application icon located in a direction of the motion of the mobile terminal.

6. The method of claim 2, further comprising:
setting an application icon of the motion menu.

7. The method of claim 6, wherein setting an application icon comprises:
displaying the at least one application icon set in the motion menu;
selecting one application icon among the at least one application icon set in the motion menu;
displaying a list of applications;
selecting one application among the list of applications; and
displaying an application icon corresponding to the one application selected among the list of applications at a location at which the one application icon selected among the at least one application icon set in the motion menu was displayed.

8. The method of claim 1, further comprising:
receiving the mode conversion input;
activating the touch sensor; and
converting the UI mode to a touch mode.

9. The method of claim 1, further comprising:
identifying, if the motion sensor is activated, a pop-up event;
activating the touch sensor; and
converting the UI mode from the motion mode to a touch mode.

10. The method of claim 9, wherein the pop-up event comprises at least one of a voice call reception, a message reception, and an alarm function.

11. The method of claim 9, further comprising:
activating, after converting the UI mode to the touch mode, the motion sensor if a command associated with the pop-up event is terminated; and
converting the UI mode from the touch mode to the motion mode.

12. A mobile terminal, comprising:
a touch sensor;
a motion sensor;
a display unit to display an application execution screen ; and
a controller to activate the motion sensor in response to a mode conversion request received in an activated state of the touch sensor, and to activate the touch sensor in response to the received mode conversion request.

13. The mobile terminal of claim 12, wherein the display unit displays a motion menu comprising at least one application icon.

14. The mobile terminal of claim 12, wherein the motion sensor identifies a motion of the mobile terminal if the display unit displays a motion menu, and wherein the controller executes an application corresponding to the identified motion of the mobile terminal.

15. The mobile terminal of claim 12, wherein the controller executes an application corresponding to a displayed application icon located in a portion of the display unit if the motion of the mobile terminal is a directional motion, the portion of the display unit corresponding to a direction of the directional motion.
